# EUROPEAN PATENT SPECIFICATION

(11) **EP 2 739 463 B1**
(45) Date of publication and mention of the grant of the patent: **25.05.2016**
(21) Application number: 13739832.7
(22) Date of filing: 26.06.2013
(51) Int. Cl.: B29D 30/00

(54) **SYSTEM AND METHOD FOR WINDING AND/OR UNWINDING STORAGE REELS**
SYSTEM UND VERFAHREN ZUM AUF-UND/ODER ABWICKELN VON ZUFUHRROLLEN
SYSTÈME ET PROCÉDÉ POUR L'ENROULAGE ET/OU LE DÉROULAGE DE BOBINES DE STOCKAGE

(30) Priority: 13.07.2012 NL 2009182
(43) Date of publication of application: 11.06.2014
(73) Proprietor: VMI Holland B.V., 8161 RK Epe (NL)
(72) Inventor: TEN WOLDE, Wiebe Herman, 7523 AH Enschede (NL)
(74) Representative: Melchior, Robin
(86) International application number: PCT/NL2013/050454
(87) International publication number: WO 2014/011033

(56) References cited:
- EP-A1- 1 236 669
- WO-A1-2010/097515
- WO-A1-2011/101738
- US-A- 1 648 990
- US-A- 1 891 273
- US-A1- 2005 189 448

## Description

### BACKGROUND

The invention relates to a system for the winding-up and/or unwinding of rubber sheet material for tyres and an intervening liner onto or from storage reels.

A system is known for the winding-up or unwinding of rubber sheet material for tyres and an intervening liner onto and from storage reels. In the known system, a storage reel and a liner reel are manually lifted and loaded onto a winding station. After the unwinding or winding-up of the storage reel has completed, operators have to replace the storage reel and the liner reel at the winding station with a new storage reel and a new liner reel, respectively. These changing operations interrupt the winding process and are furthermore hazardous due to the weight and size of the reels and the proximity of various moving parts of the winding station.

US 1,648,990 A discloses a wind-up device for sheet-rubber stock, comprises a pair of winding units each slidably laterally out of operative relation to the belt.

US 1,891,273 A discloses a frame, a support rotatable upon said frame and having opposite heads provided with a plurality of material-receiving reels.

EP 1 236 669 A discloses a tandem mobile cartridge for loading, storing and delivering continuous elastomeric strips of tire material from a forming station to a tire building station.

WO 2011/101738 A discloses an apparatus with a first storage coil, a first collecting member, a second storage coil and a second collecting member arranged side-by-side on a movable carriage, to be wound/unwound alternately.

US 2005/0189448 A discloses a reel spool storage and loading device to be used by reel-up machines that wind webs, e.g. tissue, onto successive spools to form web rolls. The reel-up machine comprises an upper portion with two or more elevation of rails to store empty spools. The stored spools are ready to be lowered and loaded into the reeling station below.

WO 2010/097515 A discloses a movable storage movable between at least two target stations for receiving, moving and handling over machine reels intended for the handling of a fiber web.

It is an object of the present invention to provide a system for the winding-up and/or unwinding of rubber sheet material for tyres and an intervening liner onto or from storage reels, wherein the continuity of the winding-up and/or unwinding can be increased.

### SUMMARY OF THE INVENTION

According to a first aspect, the invention provides a system for the winding-up and/or unwinding of rubber sheet material for tyres and an intervening liner onto or from storage reels, as defined in claim 1, the system comprising a first reel handling section, a second reel handling section and a winding section located between the first reel handling section and the second reel handling section, wherein the system is provided with a first station and a second station, wherein each station comprises a first set of carrying elements for holding a storage reel and a second set of carrying elements for holding a liner reel substantially in tandem with respect to the storage reel, wherein the first station and the second station are stationed in a handling position in the first reel handling section and the second reel handling section, respectively, for handling the loading and/or unloading of the storage reels and the liner reels onto or from the stations, and wherein the first station and the second station are arranged to be alternately moved from their respective handling positions in the reel handling sections into a winding position in the winding section and vice versa.

By alternately moving the first station and the second station into the winding section, the reels from the station that is in the reel handling section can already be unloaded and new reels can be loaded while the rubber sheet material is being wound-up or unwound onto or from the storage reel at the other station which, at the same time, is in the winding position in the winding section. In this manner, a new set of a storage reel and a liner reel can already be loaded onto the station that is in the reel handling section, prior to the entry of that station into the winding section. Thus the time to change the reels for winding-up and/or unwinding can be reduced and, as a result, the interruption in the flow of the rubber sheet material can be reduced. Furthermore, since all handling operations are performed in the reel handling sections, the amount of operations which are to be performed in the hazardous environment of the winding section, can be reduced or even eliminated. Preferred embodiments of the system according to the invention are defined in the dependent claims 2 to 11.

In an embodiment the first station and the second station are operationally coupled so as to be moved dependently of each other, wherein the second station is in the handling position in its respective reel handling section when the first station is in the winding position in the winding section, and vice versa. By moving the first station and the second station dependently of each other, it can be achieved that the movement of the first station into the winding position causes the second station to be moved into its respective handling position, and vice versa.

In an embodiment the first station and the second station are operationally coupled to each other so as to be jointly moveable. By jointly moving the first station and the second station, it can be automatically achieved that the movement of the first station into the winding position causes the second station to be moved into its respective handling position, and vice versa.

In an embodiment the first station and the second station are fixedly attached to each other. The fixed attachment between first station and the second station can ensure that they can be moved in unison.

In an embodiment the system comprises a first divider which is placed between the first station and the second station. The first divider can prevent or detect a passage of an operator or an object from the first station to the second station and vice versa. Therefore, the first divider can shield one station from the other.

In an embodiment the first divider is operationally coupled to the stations so as to be moved dependently of the stations, wherein the first divider shields the first station at the side of the first station facing towards the second reel handling section when the first station is in the winding position in the winding section, and wherein the first divider shields the second station at the side of the second station facing towards the first reel handling section when the second station is in the winding position. When the storage reel of one station is being wound-up or unwound in the winding section, an operator, being shielded by the first divider from hazardous movements of the reels in the winding section, can safely handle the loading and unloading of the reels at the adjacent station in the respective reel handling section.

In an embodiment the first divider is operationally coupled to the stations so as to be jointly moveable. By jointly moving the first station, the second station and the first divider, it can be automatically achieved that the movement of the first station into the winding position causes the first divider to shield the side of the first station facing towards the second reel handling section, and that the movement of the second station into the winding position causes the first divider to shield the side of the second station facing towards the first reel handling section.

In an embodiment the first divider is fixedly attached to at least one of the stations. The fixed attachment between the first divider and the first station and/or the second station can ensure that they can be moved in unison.

In an embodiment the system comprises second and/or further dividers which, in combination with the first divider, are arranged to form a shield around the winding section and the first reel handling section when the first station is in the winding position in the winding section, and which, in combination with the first divider, are arranged to form a shield around the winding section and the second reel handling section when the second station is in the winding position in the winding section. By forming a shield around the winding section and the empty reel handling section associated with the station that is in the winding position at the winding section, the dividers can effectively shield the other reel handling section from the other sections.

In an embodiment the second and/or further dividers are alternately moveable between a first position wherein they shield the first reel handling section and a second position wherein they shield the second reel handling section. By alternately moving the dividers, the number of dividers required to effectively shield said sections can be reduced.

In an embodiment the one or more dividers are each defined by a boundary of the group comprising a fence, a wall, an optical detection field or an array of light beams. A fence or a wall can prevent physical passage of objects or an operator. Although the optical detection field or the array of light beams can not physically prevent such passage, they can detect such passage and take appropriate action, such as shutting down the system. In the case of a divider being defined by an optical detection field or an array of light beams, said divider can simply and instantly be activated or de-activated.

In an embodiment each station comprises a carriage which allows for the station to be moved between its respective reel handling section and the winding section, wherein, preferably, the first set of carrying elements and the second set of carrying elements extend on opposite sides of the carriage. With the carrying elements extending on both sides of the carriage, the weight of the reels can be evenly balanced with respect to the carriage.

In an embodiment the system comprises a guide that extends through each of the sections in the direction in which the sections are located adjacent to each other, wherein the carriages of the stations are placed on the guide. The guide can facilitate the movement of the carriages between the various sections.

In an embodiment the first set of carrying elements and the second set of carrying elements are moveable with respect to each other in the axial direction of the reels. The sets of carrying elements can be moved in the axial direction of the reels to align the set of carrying elements for loading or unloading of the reel. Furthermore, the sets of carrying elements can be moved in the axial direction of the reels to adjust the tandem alignment of the reels during winding-up or unwinding, to correct for irregularities in the material to be wound.

In an embodiment each set of carrying elements comprise two arms which are arranged for engaging an axis of a reel from both sides of the reel, wherein, for each set of carrying elements, the arms are moveable with respect to each other in the axial direction of the reel. By having the arms of each set of carrying elements moveable with respect to each other, the arms can be moved towards each other to engage with a reel. Additionally, the intermediate distance between the arms can be varied in order to accommodate varies reel sizes.

In an embodiment the arms are moveable with respect to each other in a translatory manner in the axial direction of the reel. The translatory movement can ensure that the arms are able to coaxially engage a reel.

In an embodiment the system further comprises a first lift mechanism at the first reel handling section and a second lift mechanism at the second reel handling section, wherein the lift mechanisms are arranged for lifting or lowering the storage reels and the liners reels to and from their respective stations. The lift mechanisms can reduce the hazard for operators handling during the handling of heavy reels.

According to a second aspect, the invention provides a method as defined in claim 12, for the winding-up and/or unwinding of rubber sheet material for tyres and an intervening liner onto or from storage reels, using a system comprising a first reel handling section, a second reel handling section and a winding section located between the first reel handling section and the second reel handling section, wherein the system is provided with a first station and a second station, wherein each station comprises a first set of carrying elements for holding a storage reel and a second set of carrying elements for holding a liner reel substantially in tandem with respect to the storage reel, wherein the method comprises the steps of stationing the first station and the second station in a handling position in the first reel handling section and the second reel handling section, respectively, loading and/or unloading the storage reels and the liner reels onto or from the stations, and alternately moving the first station and the second station from their respective handling positions in the reel handling sections into a winding position in the winding section and vice versa.

Again, by alternately moving the first station and the second station into the winding section, the reels from the station that is in the reel handling section can already be unloaded and new reels can be loaded while the rubber sheet material is being wound-up or unwound onto or from the storage reel at the other station which, at the same time, is in the winding position in the winding section. Preferred embodiments of the method according to the invention are defined in the dependent claims 13 to 15.

In an embodiment the first station and the second station are moved dependently of each other, wherein the method comprises the step of moving the second station into the handling position in its respective reel handling section when the first station is in the winding position in the winding section, and vice versa. By moving the first station and the second station dependently of each other, it can be achieved that the movement of the first station into the winding position causes the second station to be moved into its respective handling position, and vice versa.

In an embodiment the first station and the second station are jointly moved. By jointly moving the first station and the second station, it can be automatically achieved that the movement of the first station into the winding position causes the second station to be moved into its respective handling position, and vice versa.

In an embodiment the system comprises a first divider which is placed between the first station and the second station, wherein the method comprises the steps of moving the first divider dependently of the stations, thereby shielding the first station at the side of the first station facing towards the second reel handling section when the first station is in the winding position in the winding section, and shielding the second station at the side of the second station facing towards the first reel handling section when the second station is in the winding position. When the storage reel of one station is being wound-up or unwound in the winding section, an operator, being shielded by the first divider from hazardous movements of the reels in the winding section, can safely handle the loading and unloading of the reels at the adjacent station in the respective reel handling section.

In an embodiment the first divider and the stations are jointly moved. By jointly moving the first station, the second station and the first divider, it can be automatically achieved that the movement of the first station into the winding position causes the first divider to shield the side of the first station facing towards the second reel handling section, and that the movement of the second station into the winding position causes the first divider to shield the side of the second station facing towards the first reel handling section.

In an embodiment the system comprises a sensor, wherein the method comprises the steps of detecting the end of the liner with the sensor as the liner is being wound-up onto one of the reels, controlling the rotation of the reel onto which the liner is being wound-up based on the detected end of the liner so that, after the controlled rotation, the detected end of the liner is located in a predetermined position on the reel. Thus, the predetermined position of the end of the liner on the reel can easily be found by an operator.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figure 1 shows a system for winding and unwinding storage reels according to a first embodiment of the invention, in a first position; and
figure 2 shows the system according to figure 1 in a second position.

### DETAILED DESCRIPTION OF THE INVENTION

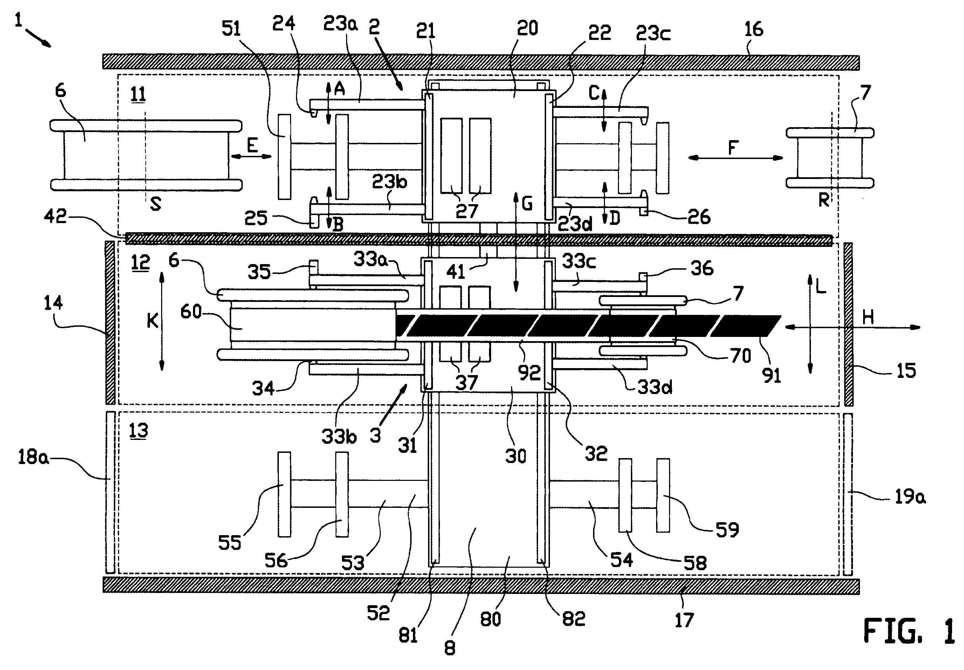

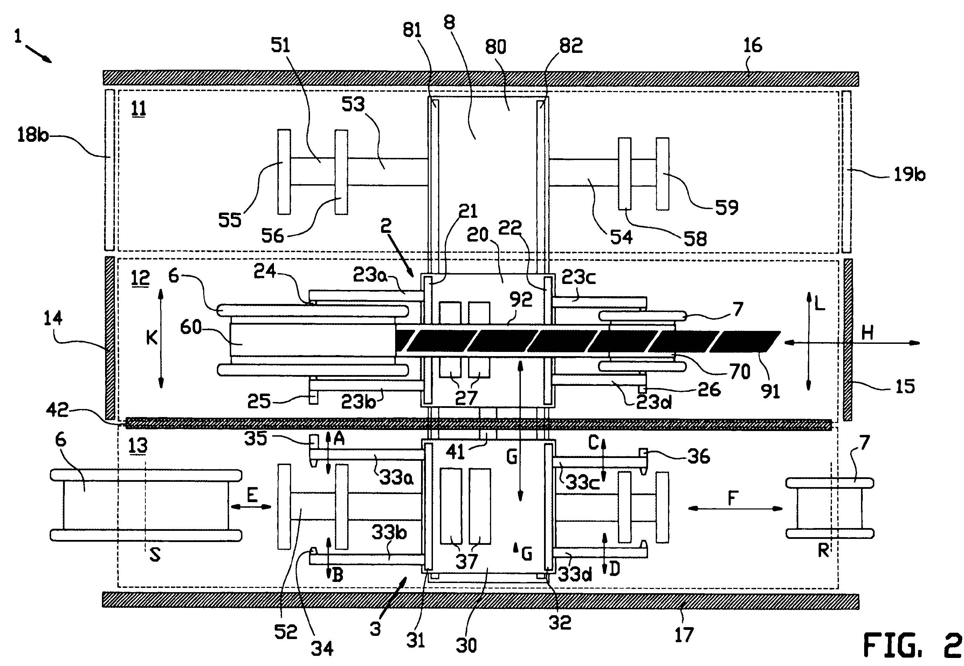

Figures 1 and 2 show a system 1 for the winding-up and/or unwinding of rubberized sheets or rubber sheet material 91 for tyres and an intervening liner 92 onto or from storage reels 6 according to an exemplary embodiment of the invention.

In this example, the rubber sheet material 91 comprises a plurality of cut rubber strips with metal reinforcement cord. Such strips are generally known as breakers which form the carcass layer of a green tyre. The liner 92 comprises a continuous layer of non-sticky material.

In winding-up mode of the system 1, the liner 92 is supplied from a roll 70 of liner 92 on the full liner reel 7 and combined with the rubber sheet material 91 before being wound-up onto an initially empty storage reel 6 to form a roll 60. The rubber sheet material 91 is imposed on the intervening liner 92 so that, when the rubber sheet material 91 is wound-up as a roll 60 onto the storage reel 6, the rubber sheet material 91 of each winding of the roll 60 around the storage reel 6 is separated by the intervening liner 92 from the previous and/or the next winding of rubber sheet material 91. Thus, with the intervening liner 92, sticking together of multiple windings of the rubber sheet material 91 within the roll 60 can be prevented.

In unwinding mode of the system 1, the liner 92 and the rubber sheet material 91 are taken back onto an initially empty liner reel 7 from a full storage reel 6 and the rubber sheet material 91 is separated from the liner 92.

Once the winding-up or unwinding for a certain storage reel 6 and certain liner reel 7 is completed, they have to be interchanged with or alternated by a new storage reel 6 and a new liner reel 7 quickly, in order to ensure continuity in tyre building process.

To this end, the system 1 according to the invention comprises a first station 2 and a second station 3 which are arranged to be alternately moveable in an alternation direction G between a reel handling position for handling the loading and unloading of storage reels 6 and liner reels 7 and a winding position for the winding-up or unwinding of storage reels 6 and liner reels 7 in a manner which will be described in more detail hereafter.

As schematically shown in figures 1 and 2, the system 1 can be divided into a first reel handling section 11, a winding section 12 and a second reel handling section 13. The winding section 12 is located in-between the first reel handling section 11 and the second reel handling section 13. The sections 11-13 are located adjacent to each other in the alternation direction G. In this example, the sections 11-13 are of elongated, rectangular shape and border with each other along their longitudinal sides. The system 1 is provided with a main guide 8 that extends through each of the sections 11-13 in the alternation direction G. The main guide 8 comprises a base 80, for example a factory floor or an elevation on the factory floor. On the base 80, the main guide 8 is provided with a set of main rails 81, 82 which facilitate the movement of the stations 2, 3 between the various sections 11-13 in the alternation direction G. As shown in figures 1 and 2, the stations 2, 3 are each retracted into or stationed in their own reel handling section 11, 13 when the other station 2, 3 is in the winding position in the winding section 12.

As shown in figures 1 and 2, each station 2, 3 is provided with a carriage 20, 30 which is arranged on the main rails 81, 82 of the main guide 8 so as to be moveable over the main guide 8 in the alternation direction G. The stations 2, 3 are positioned and moved dependently with respect to each other in such a manner that the first station and the second station 2, 3 are alternately moved from a handling position in their respective reel handling sections 11, 13 into a winding position in the winding section 12. More in particular, a movement of the carriages 2, 3 between the positions as shown in figures 1 and 2 is achieved, wherein figure 1 shows the situation wherein the second station 3 is in the winding position in the winding section 12 and the first station 2 is in the handling position in the first reel handling section 11, and wherein figure 2 shows the situation wherein the first station 2 is in the winding position in the winding section 12 and the second station 3 is in the handling position in the second reel handling section 13. When the first station 2 and the second station 3 are in the winding section 12, their respective reel handling sections 11, 13 are inactive, in the sense that there are no handling operations being performed.

In this exemplary embodiment, the carriages 20, 30 of the stations 2, 3 are interconnected or fixed to each other via a coupling 41, so that the stations 2, 3 are able to jointly move, or move in unison. As movement of one of the stations causes movement of the other, only one drive (not shown) is required for automatically achieving the aforementioned dependent movement. In an alternative embodiment, the stations 2, 3 are individually moved by separate drives. However, in such an alternative embodiment, the drives are controlled dependently of each other to achieve the aforementioned dependent movement of the stations 2, 3.

Each carriage 20, 30 is provided with a first arm 23a, 33a and a second arm 23b, 33b which form a first set of carrying elements, and a third arm 23c, 33c and a fourth arm 23d, 33d which form a second set of carrying elements. The first set of carrying elements and the second set of carrying elements extend from opposite sides of the carriage 20, 30 for with the first arm 23a, 33a and the second arm 23b, 33b holding a storage reel 6 at one side of the carriage 20, 30 and with the third arm 23c, 33c and the fourth arm 23d, 33d holding a liner reel 7 at the opposite side of the carriage 20, 30, respectively. In this example, the carrying elements extend in a direction transverse to the alternation direction G. As a result, the first set of carrying elements and the second set of carrying elements also extend on opposite sides of the main guide 8.

The arms 23a-d, 33a-d are provided with clamps 24, 34 at their respective distal ends, which clamps 24, 34 are arranged for engaging the storage reel 6 and the liner reel 7 at their respective axes S, R. The storage reel 6 and the liner reel 7 are rotatable with respect to the arms 23a-d, 33a-d around their respective axes S, R. For each set of carrying elements, one of the arms, in this case the second arm 23b, 33b and the fourth arm 23d, 33d, are provided with reel drives 25, 26 for driving and/or braking the rotation of the respective engaged reel.

The arms 23a, 23b, 33a, 33b of the first set of carrying elements are individually coupled to a first adjustment guide in the form of a first adjustment rail 21, 31 at one side of the carriage 20, 30. The arms 23c, 23d, 33c, 33d of the second set of carrying elements are individually coupled to a second adjustment guide in the form of a second adjustment rail 22, 32 at an opposite side of the carriage 20, 30 with respect to the first set of carrying elements. The first arms 23a 33a, the second arms 23b, 33b, the third arms 23c, 33c and the fourth arms 23d, 33d are individually moveable with respect to each other along the respective adjustment rails 21, 22, 31, 32 in a translatory manner in a first engagement direction A, a second engagement direction B, a third engagement direction C and a fourth engagement direction D, respectively. The movement of the arms 23a-d, 33a-d does allow for the clamps 24 to engage or disengage from the reels 6, 7 in various positions along the main guide 8. Thus, the reels 6, 7 do not have to be centered perfectly between the arms 23a-d, as the arms 23a-d are able to move to the position of the reel 6, 7. Additionally, for each set of carrying elements, the distance between two respective arms 23a-d, 33a-d of said set of carrying elements can increased or decreased, in order to accommodate various sizes of reels 6, 7.

The first arms 23a, 33a and the second arms 23b, 33b can however also be controlled to be jointly moved in a first alignment direction K along the first adjustment rail 21, 31. In a similar manner, the third arms 23c, 33c and the fourth arms 23d, 33d can be controlled to be jointly moved in a second alignment direction L along the second adjustment rail 22, 32. This allows for movement of the first set of carrying elements and the second set of carrying elements, and thus of the reels 6, 7 to be held in-between said carrying elements, to be moved with respect to each other. As shown in figures 1 and 2, the storage reel 6 and the liner reel 7 are held substantially in succession or in tandem alignment with respect to each other, such that the storage reel 6 and the liner reel 7 can be coupled to each other in substantially the same plane for in mutual cooperation winding-up or unwinding the rubber sheet material 91 and the liner 92 onto or from the storage reel 6. However, small adjustments of the tandem alignment in the first alignment direction K or the second alignment direction L might be required to compensate for irregularities in the windings of the liner 92 and/or the rubber sheet material 91 on the liner 92.

As shown in figures 1 and 2, the first reel handling section 11 and the second reel handling section 13 are provided with a first lift mechanism 51 and a second lift mechanism 52, respectively. The lift mechanisms 51, 52 each comprise a first lifting beam 53 and a second lifting beam 54 extending on opposite sides of the main guide 8, parallel to the set of carrying elements of the stations 2, 3. The first lifting beam 53 is provided with two transverse support bars 55, 56 which are spaced apart from each other for in-between the support bars 55, 56 supporting a storage reel 6 along a part of the circumference thereof. The second lifting beam 54 is provided with two transverse support bars 58, 59 which are spaced apart from each other for in-between the support bars 58, 59 supporting a liner reel 7 along a part of the circumference thereof.

At the coupling 41 between the stations 2, 3, the system 1 is provided with a first divider 42. The first divider 42 preferably extends between the stations 2, 3 along substantially the entire length of the sections 11-13 in the longitudinal direction of the sections 11-13. The first divider 42 is either fixedly coupled to the coupling 41 to jointly move or move in unison with the stations 2, 3, or is provided with its own drive which is controlled in a manner wherein the stations 2, 3 and the first divider are moved dependently of each other. In this example, the first divider 42 comprises a fence or a wall which defines a physical boundary between the first station 2 and the second station 3. When the second station 3 is in the winding position in the winding section 12, as shown in figure 1, the first divider 42 shields the second station 3 at the side of the second station 3 facing towards the first reel handling section 11. When the first station 2 is in the winding position in the winding section 12, as shown the in figure 2, the first divider 42 shields the first station 2 at the side of the first station 2 facing towards the second reel handling section 13. Thus, an operator, being shielded by the first divider 42 from hazardous movements of the reels 6, 7 in the winding section 12, can safely handle the loading and unloading of the reels 6, 7 in the adjacent reel handling section 11, 13.

The system 1 further comprises a second divider 14 and a third divider 15 which are strategically placed at the transverse sides of the winding section 12. The second divider 14 and the third divider 15 comprise a wall or a fence which, in combination with the wall or fence of the first divider 42, form a physical shield around three sides of the winding section 12. The system 1 is also provided with a fourth divider 16 and a fifth divider 16 which are placed along the outer longitudinal sides of the first reel handling section 11 and the second reel handling section 13, respectively. Finally, the remaining transverse sides of the first reel handling section 11 and the second reel handling section 13 are provided with a sixth divider 18a, 18b and a seventh divider 19a, 19b, comprising an optical detection field or an array of light beams. The sixth divider 18a, 18b and the seventh divider 19a, 19b can simply and instantly be selectively activated or de-activated for each reel handling sections 11, 13 to allow for passage of operators and objects between the reel handling sections 11, 13 and the environment outside the system 1.

Together, the dividers 14-17, 18a, 18b, 19a, 19b, 42 form a shield around the winding section 12 and the inactive reel handling section 11, 13 and the sixth divider 18a, 18b and the seventh divider 19a, 19b at the active reel handling section 11, 13 are deactivated. Thus, the one stations 2, 3 which is in its handling position in its respective reel handling section 11, 13 is accessible, while the operators handling the loading and unloading of reels 6, 7 of said one station 2, 3 in said active reel handling section 11, 13 are completely shielded from the other sections.

It will be apparent to one skilled in the art that variations in the types of boundaries which form each divider 14-17, 18a, 18b, 19a, 19b, 42 fall under the scope of the invention. Each of the dividers 14-16, 18a, 18b, 19a, 19b, 42 could comprise a boundary defined by a wall, an optical detection field or an array of light beams or other means of passage detection and/or prevention. The fence and the wall can prevent passage of an operator or objects from one station or section to the other. Although the optical detection field or the array of light beams can not physically prevent a passage, they can detect such passage and take appropriate action, such as shutting down the system 1, in case of an unauthorized passage.

The method for the winding-up and unwinding of rubber sheet material 91 for tyres and an intervening liner 92 onto or from storage reels 6 will be elucidated below on the basis of figures 1 and 2. As both stations 2, 3 cycle through substantially the same steps during the method, only the steps relating to the first station 2 will be described in detail and the steps relating to the second station 3 will be briefly discussed.

Figure 1 shows the situation wherein the first station 2 is in the handling position in the first reel handling section 11. If the system 1 is in winding-up mode, a full storage reel 6 with a roll 60 of rubber sheet material 91 and liner 92 and an empty liner reel 7 are unloaded from and lowered down from the first station 2 via the first lift mechanism 51 in the loading/unloading directions E, F and a new, empty storage reel 6 and a full liner reel 7 with a roll 70 of liner 92 are lifted up to and loaded onto the first station 2 via the first lift mechanism 51 in the loading/unloading directions E, F. If the system 1 is in unwinding mode, an empty storage reel 6 and an full liner reel 7 with a roll 70 of liner 92 are unloaded from and lowered down from the first station 2 via the first lift mechanism 51 in the loading/unloading directions E, F and a new, full storage reel 6 with a roll 60 of rubber sheet material 91 and liner 92 and an empty liner reel 7 are lifted up to and loaded onto the first station 2 via the first lift mechanism 51 in the loading/unloading directions E, F.

When the clamps 24 of the arms 23a-d have engaged with the newly loaded reels 6, 7, the first lift mechanism 51 can be lowered so that the reels 6, 7 are freely suspended from the arms 23a-d. Subsequently, the liner 92 of from the full reel 6, 7 is partially unwound so that the free end thereof can be connected to the circumference of the empty reel 6, 7. The first station 2 is now ready to be moved in the alternation direction G into the winding section 12, directly after the winding of the reels 6, 7 of the second station 3 in the winding section 12 has been completed.

In figure 2, the situation is shown wherein the first station 2 has moved from its handling position in the first reel handling section 11 into the winding position in the winding section 12. In this position, the drive 25, 26 of the empty reel 6, 7 can be driven to take on the connected liner 92 from the full reel 6, 7. As the liner 92 is transferred from the full reel 6, 7 onto the empty reel 6, 7, the drive 25, 26 of the full reel 6, 7 is activated to keep tension in the liner 92 and to prevent the liner 92 from slacking. In the winding-up mode of the system 1, the rubber sheet material 91 is imposed on the liner 92 before the liner 92 is wound-up around the storage reel 6. In the unwinding mode of the system 1, the rubber sheet material 91 is separated from the liner 92 before the liner 92 is wound-up onto the liner reel 7. The rubber sheet material 91 is supplied or extracted by a conveyor (not shown) along a rubber sheet material inflow/outflow direction H.

Once the winding of the reels 6, 7 of the first station 2 has been completed, the first station 2 can be moved back again to its handling position in the first reel handling section 11 to unload the reels 6, 7 and replace them with new reels 6, 7, after which the aforementioned steps can be repeated.

During the aforementioned steps, the second station 3 has alternated with the first station 2 by moving into the winding position, while the first station 2 was in the handling position and vice versa. During the loading and unloading of the reels 6, 7 of the first station 2, the reels 6, 7 of the second station 3 have cooperated in order to wind-up or unwind the storage reel 6, depending on the mode of the system 1. As the first station 2 moved into the winding position, it caused the second station 3 to move from the winding position into its handling position in the second reel handling section 13. At the same time in which the reels 6, 7 of the first station 1 were being wound in the winding section 12, the storage reel 6 and the liner reel 7 of the second station 3 were unloaded and replaced or interchanged by new reels 6, 7 in a similar manner as described before in relation to the unloading and loading of the reels 6, 7 of the first station 2.

By alternately moving the first station 2 and the second station 3 into the winding section 12, a new storage reel 6 and a liner reel 7 can already be loaded onto the station 2, 3 that is in the reel handling section 11, 13, prior to the entry of that station 2, 3 into the winding section 12. Thus the time to change the reels 6, 7 for winding-up and/or unwinding can be reduced and, as a result, the interruption in the inflow or outflow H of the rubber sheet material 91 can be reduced.

In an embodiment the system 1 comprises a sensor (not shown), wherein the method comprises the step of detecting the end of the liner 92 with the sensor as the liner 92 is being wound-up onto one of the reels 6, 7. After the end of the liner 92 has been detected, the drive 25, 26 of the reel 6, 7 on which the liner 92 is being wound-up is controlled so that the further rotation of the reel 6, 7 past the point of detection of the end of the liner 92 is known. By controlling said further rotation and by stopping the rotation once the end of the liner 92 has travelled a predetermined distance from the point of detection, the final position of the end of the liner 92 on the reel 6, 7 can be accurately controlled. As a result, the predetermined position of the end of the liner 92 on the reel 6, 7 can easily be found by an operator.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. System (1) for the winding-up and/or unwinding of rubber sheet material (91) for tyres and an intervening liner (92) onto or from storage reels (6), comprising a first reel handling section (11), a second reel handling section (13) and a winding section (12) located between the first reel handling section and the second reel handling section, wherein the system is provided with a first station (2) and a second station (3), wherein each station comprises a first set of carrying elements for holding a storage reel (6) and a second set of carrying elements for holding a liner reel (7) substantially in tandem with respect to the storage reel, wherein the first station and the second station are stationed in a handling position in the first reel handling section and the second reel handling section, respectively, for handling the loading and/or unloading of the storage reels and the liner reels onto or from the stations, and wherein the first stations (2) and the second stations (3) are arranged to be alternately moved from their respective handling positions in the reel handling sections into a winding position in the winding section and vice versa.

2. System according to claim 1, wherein the first station and the second station are operationally coupled so as to be moved dependently of each other, wherein the second station is in the handling position in its respective reel handling section when the first station is in the winding position in the winding section, and vice versa.

3. System according to claim 2, wherein the first station and the second station are operationally coupled to each other so as to be jointly moveable, preferably wherein the first station and the second station are fixedly attached to each other.

4. System according to claim 2 or 3, comprising a first divider which is placed between the first station and the second station, preferably wherein the first divider is operationally coupled to the stations so as to be moved dependently of the stations, wherein the first divider shields the first station at the side of the first station facing towards the second reel handling section when the first station is in the winding position in the winding section, and wherein the first divider shields the second station at the side of the second station facing towards the first reel handling section when the second station is in the winding position.

5. System according to claim 4, wherein the first divider is operationally coupled to the stations so as to be jointly moveable, preferably wherein the first divider is fixedly attached to at least one of the stations.

6. System according to claims 4 or 5, comprising second and/or further dividers which, in combination with the first divider, are arranged to form a shield around the winding section and the first reel handling section when the first station is in the winding position in the winding section, and which, in combination with the first divider, are arranged to form a shield around the winding section and the second reel handling section when the second station is in the winding position in the winding section, preferably wherein the second and/or further dividers are alternately moveable between a first position wherein they shield the first reel handling section and a second position wherein they shield the second reel handling section.

7. System according to any one of claims 4-6, wherein the one or more dividers are each defined by a boundary of the group comprising a fence, a wall, an optical detection field or an array of light beams.

8. System according to any one of the preceding claims, wherein each station comprises a carriage which allows for the station to be moved between its respective reel handling section and the winding section, wherein the first set of carrying elements and the second set of carrying elements extend on opposite sides of the carriage, preferably wherein the system comprises a guide that extends through each of the sections in the direction in which the sections are located adjacent to each other, wherein the carriages of the stations are placed on the guide.

9. System according to any one of the preceding claims, wherein the first set of carrying elements and the second set of carrying elements are moveable with respect to each other in the axial direction of the reels.

10. System according to any one of the preceding claims, wherein each set of carrying elements comprise two arms which are arranged for engaging an axis of a reel from both sides of the reel, wherein, for each set of carrying elements, the arms are moveable with respect to each other in the axial direction of the reel, preferably wherein the arms are moveable with respect to each other in a translatory manner in the axial direction of the reel.

11. System according to any one of the preceding claims, further comprising a first lift mechanism at the first reel handling section and a second lift mechanism at the second reel handling section, wherein the lift mechanisms are arranged for lifting or lowering the storage reels and the liners reels to and from their respective stations.

12. Method for the winding-up and/or unwinding of rubber sheet material for tyres and an intervening liner onto or from storage reels, using a system comprising a first reel handling section, a second reel handling section and a winding section located between the first reel handling section and the second reel handling section, wherein the system is provided with a first station and a second station, wherein each station comprises a first set of carrying elements for holding a storage reel and a second set of carrying elements for holding a liner reel substantially in tandem with respect to the storage reel, wherein the method comprises the steps of stationing the first station and the second station in a handling position in the first reel handling section and the second reel handling section, respectively, loading and/or unloading the storage reels and the liner reels onto or from the stations, and alternately moving the first station and the second station from their respective handling positions in the reel handling sections into a winding position in the winding section and vice versa.

13. Method according to claim 12, wherein the first station and the second station are moved dependently of each other, wherein the method comprises the step of moving the second station into the handling position in its respective reel handling section when the first station is in the winding position in the winding section, and vice versa, preferably wherein the first station and the second station are jointly moved.

14. Method according to claim 12 or 13, wherein the system comprises a first divider which is placed between the first station and the second station, wherein the method comprises the steps of moving the first divider dependently of the stations, thereby shielding the first station at the side of the first station facing towards the second reel handling section when the first station is in the winding position in the winding section, and shielding the second station at the side of the second station facing towards the first reel handling section when the second station is in the winding position, preferably wherein the first divider and the stations are jointly moved.

15. Method according to any one of claims 12-14, wherein the system comprises a sensor, wherein the method comprises the steps of detecting the end of the liner with the sensor as the liner is being wound-up onto one of the reels, controlling the rotation of the reel onto which the liner is being wound-up based on the detected end of the liner so that, after the controlled rotation, the detected end of the liner is located in a predetermined position on the reel.

## Patentansprüche

1. System (1) zum Aufwickeln und/oder Abwickeln von Gummibahnmaterial (91) für Reifen und einem Zwischentragband (92) auf und von Zufuhrrollen bzw. Speicherspulen (6), das eine erste Spulenbearbeitungssektion (11) und eine zweite Spulenbearbeitungssektion (13) und eine Wickelsektion (12) umfasst, die sich zwischen der ersten Spulenbearbeitungssektion und der zweiten Spulenbearbeitungssektion befindet, wobei das System mit einer ersten Station (2) und einer zweiten Station (3) bereitgestellt wird, wobei jede Station eine erste Gruppe von tragenden Elementen zum Halten einer Speicherspule (6) und eine zweite Gruppe von tragenden Elementen zum Halten einer Tragbandsspule (7) im Wesentlichen zusammen mit Bezug auf die Speicherspule umfasst, wobei die erste Station und die zweite Station in einer Bearbeitungsposition in der ersten Spulenbearbeitungssektion bzw. der zweiten Spulenbearbeitungssektion stationiert sind, um das Aufladen und/oder das Abladen der Speicherspulen und der Tragbandspulen auf die oder von den Stationen zu bewältigen, und wobei die erste Station (2) und die zweite Station (3) so angeordnet sind, dass sie wechselseitig von ihren jeweiligen Bearbeitungspositionen in den Spulenbearbeitungssektionen in eine Wickelposition in der Wickelsektion und umgekehrt bewegt werden.

2. System nach Anspruch 1, wobei die erste Station und die zweite Station funktionsbedingt gekoppelt sind, so dass sie abhängig voneinander bewegt werden, wobei sich die zweite Station in der Bearbeitungsposition in ihrer jeweiligen Spulenbearbeitungssektion befindet, wenn sich die erste Station in der Wickelposition in der Wickelsektion befindet und umgekehrt.

3. System nach Anspruch 2, wobei die erste Station und die zweite Station funktionsbedingt gekoppelt sind, so dass sie gemeinsam bewegbar sind, wobei die erste Station und die zweite Station vorzugsweise fest miteinander verbunden sind.

4. System nach Anspruch 2 oder 3 mit einem ersten Trennelement, das zwischen der ersten Station und der zweiten Station angeordnet ist, wobei das erste Trennelement vorzugsweise mit den Stationen funktionsbedingt gekoppelt ist, so dass es abhängig von den Stationen bewegt wird, wobei das erste Trennelement die erste Station an der Seite der ersten Station abschirmt, die der zweiten Spulenbearbeitungssektion zugewandt ist, wenn sich die erste Station in der Wickelposition in der Wickelsektion befindet, und wobei das erste Trennelement die zweite Station an der Seite der zweiten Station abschirmt, die der ersten Spulenbearbeitungssektion zugewandt ist, wenn sich die zweite Station in der Wickelposition befindet.

5. System nach Anspruch 4, wobei das erste Trennelement mit den Stationen funktionsbedingt gekoppelt ist, so dass sie gemeinsam bewegbar sind, wobei das erste Trennelement vorzugsweise mit wenigstens einer der Stationen fest verbunden ist.

6. System nach Anspruch 4 oder 5 mit einem zweiten und/oder weiteren Trennelementen, die in Kombination mit dem ersten Trennelement angeordnet sind, um eine Abschirmung um die Wickelsektion und die erste Spulenbearbeitungssektion zu bilden, wenn sich die erste Station in der Wickelposition in der Wickelsektion befindet, und die in Kombination mit dem ersten Trennelement angeordnet sind, um eine Abschirmung um die Wickelsektion und die zweite Spulenbearbeitungssektion zu bilden, wenn sich die zweite Station in der Wickelposition in der Wickelsektion befindet, wobei vorzugsweise das zweite und/oder die weiteren Trennelemente wechselseitig zwischen einer ersten Position, wobei sie die erste Spulenbearbeitungssektion abschirmen, und einer zweiten Position bewegbar sind, wobei sie die zweite Spulenbearbeitungssektion abschirmen.

7. System nach einem der Ansprüche 4 - 6, wobei ein oder mehrere Trennelemente jeweils durch eine Abgrenzung der Gruppe definiert sind, die einen Zaun, eine Wand, ein optisches Erfassungsfeld oder ein Anordnung von Lichtstrahlen umfassen.

8. System nach einem der vorhergehenden Ansprüche, wobei jede Station einen Schlitten umfasst, der es der Station ermöglicht, zwischen ihrer jeweiligen Spulenbearbeitungssektion und der Wickelsektion bewegt zu werden, wobei sich die erste Gruppe von tragenden Elementen und die zweite Gruppe von tragenden Elementen an gegenüberliegenden Seiten des Schlittens erstrecken, wobei das System vorzugsweise eine Führung umfasst, die sich durch jede der Sektionen in die Richtung erstreckt, in der die Sektionen aneinander angrenzend angeordnet sind, wobei die Schlitten der Stationen auf der Führung platziert sind.

9. System nach einem der vorhergehenden Ansprüche, wobei die erste Gruppe von tragenden Elementen und die zweite Gruppe von tragenden Elementen mit Bezug aufeinander in der axialen Richtung der Spulen bewegbar sind.

10. System nach einem der vorhergehenden Ansprüche, wobei jede Gruppe von tragenden Elementen zwei Arme umfasst, die angeordnet sind, um in eine Achse einer Spule von beiden Seiten der Spule einzugreifen, wobei für jede Gruppe von tragenden Elementen die Arme mit Bezug aufeinander in der axialen Richtung der Spulen bewegbar sind, wobei die Arme vorzugsweise mit Bezug aufeinander in einer translatorischen Weise in der axialen Richtung der Spulen bewegbar sind.

11. System nach einem der vorhergehenden Ansprüche, des Weiteren mit einem ersten Hebemechanismus an der ersten Spulenbearbeitungssektion und einem zweiten Hebemechanismus an der zweiten Spulenbearbeitungssektion, wobei die Hebemechanismen angeordnet sind, um die Speicherspulen und die Tragbandspulen zu und von ihren jeweiligen Stationen anzuheben und abzusenken.

12. Verfahren zum Aufwickeln und/oder Abwickeln von Gummibahnmaterial für Reifen und einem Zwischentragband auf und von Speicherspulen mittels eines Systems, das eine erste Spulenbearbeitungssektion und eine zweite Spulenbearbeitungssektion und eine Wickelsektion umfasst, die sich zwischen der ersten Spulenbearbeitungssektion und der zweiten Spulenbearbeitungssektion befindet, wobei das System mit einer ersten Station und einer zweiten Station bereitgestellt wird, wobei jede Station eine erste Gruppe von tragenden Elementen zum Halten einer Speicherspule und eine zweite Gruppe von tragenden Elementen zum Halten einer Tragbandsspule zusammen mit der Speicherspule umfasst, wobei das Verfahren die Schritte zum Stationieren der ersten Station und der zweiten Station in einer Bearbeitungsposition in der ersten Spulenbearbeitungssektion bzw. der zweiten Spulenbearbeitungssektion, das Aufladen und/oder das Abladen der Speicherspulen und der Tragbandspulen auf die oder von den Stationen und wechselseitiges Bewegen der ersten Station und der zweiten Station von ihren jeweiligen Bearbeitungspositionen in den Spulenbearbeitungssektionen in eine Wickelposition in der Wickelsektion und umgekehrt umfasst.

13. Verfahren nach Anspruch 12, wobei die erste Station und die zweite Station abhängig voneinander bewegt werden, wobei das Verfahren den Schritt zum Bewegen der zweiten Station in die Bearbeitungsposition in ihrer jeweiligen Spulenbearbeitungssektion umfasst, wenn sich die erste Station in der Wickelposition in der Wickelsektion befindet und umgekehrt, wobei die erste Station und die zweite Station vorzugsweise gemeinsam bewegt werden.

14. Verfahren nach Anspruch 12 oder 13, wobei das System ein erstes Trennelement umfasst, das zwischen der ersten Station und der zweiten Station angeordnet ist, wobei das Verfahren die Schritte zum Bewegen des ersten Trennelements abhängig von den Stationen umfasst, wobei dadurch die erste Station an der Seite der ersten Station abgeschirmt wird, die der zweiten Spulenbearbeitungssektion zugewandt ist, wenn sich die erste Station in der Wickelposition in der Wickelsektion befindet, und die zweite Station an der Seite der zweiten Station abgeschirmt wird, die der ersten Spulenbearbeitungssektion zugewandt ist, wenn sich die zweite Station in der Wickelposition befindet, wobei das erste Trennelement und die Stationen vorzugsweise gemeinsam bewegt werden.

15. Verfahren nach einem der Ansprüche 12 - 14, wobei das System einen Sensor umfasst, wobei das Verfahren die Schritte zum Erfassen des Endes des Tragbands mit dem Sensor umfasst, wenn das Tragband auf eine der Spulen aufgewickelt ist, wobei die Drehung der Spule, auf die das Tragband aufgewickelt wird, auf der Basis des erfassten Endes gesteuert wird, so dass sich nach der gesteuerten Drehung das erfasste Ende des Tragbands in einer vorgegebenen Position auf der Spule befindet.

## Revendications

1. Système (1) pour enrouler et/ou dérouler un matériau en feuille de caoutchouc (91) pour pneus et un revêtement intermédiaire (92) sur ou depuis des bobines de stockage (6), comprenant une première section de manipulation de bobine (11), une seconde section de manipulation de bobine (13) et une section d'enroulement (12) positionnée entre la première section de manipulation de bobine et la seconde section de manipulation de bobine, dans lequel le système est prévu avec une première station (2) et une seconde station (3), dans lequel chaque station comprend un premier ensemble d'éléments de support pour maintenir une bobine de stockage (6) et un second ensemble d'éléments de support pour maintenir une bobine de revêtement (7) sensiblement en tandem par rapport à la bobine de stockage, dans lequel la première station et la seconde station sont stationnées dans une position de manipulation dans la première section de manipulation de bobine et la seconde section de manipulation de bobine respectivement, pour réaliser le chargement et/ou le déchargement des bobines de stockage et des bobines de revêtement sur ou depuis les stations, et dans lequel la première station (2) et la seconde station (3) sont agencées pour être déplacées de manière alternée à partir de leurs positions de manipulation respectives dans les sections de manipulation de bobine dans une position d'enroulement dans la section d'enroulement et vice versa.

2. Système selon la revendication 1, dans lequel la première station et la seconde station sont couplées de manière opérationnelle afin d'être déplacées en fonction l'une de l'autre, dans lequel la seconde station est dans la position de manipulation dans sa section de manipulation de bobine respective lorsque la première station est dans la position d'enroulement dans la section d'enroulement, et vice versa.

3. Système selon la revendication 2, dans lequel la première station et la seconde station sont couplées de manière opérationnelle l'une à l'autre pour être conjointement mobiles, de préférence dans lequel la première station et la seconde station sont fixement fixées entre elles.

4. Système selon la revendication 2 ou 3, comprenant un premier diviseur qui est placé entre la première station et la seconde station, de préférence dans lequel le premier diviseur est couplé de manière opérationnelle aux stations afin d'être déplacé en fonction des stations, dans lequel le premier diviseur protège la première station au niveau du côté de la première station orienté vers la seconde section de manipulation de bobine lorsque la première station est dans la position d'enroulement dans la section d'enroulement, et dans lequel le premier diviseur protège la seconde station au niveau du côté de la seconde station orienté vers la première section de manipulation de bobine lorsque la seconde section est dans la position d'enroulement.

5. Système selon la revendication 4, dans lequel le premier diviseur est couplé de manière opérationnelle aux stations pour être conjointement mobiles, de préférence dans lequel le premier diviseur est fixé de manière fixe à au moins l'une des stations.

6. Système selon les revendications 4 ou 5, comprenant un deuxième et/ou d'autres diviseurs qui, en combinaison avec le premier diviseur, sont agencés pour former une protection autour de la section d'enroulement et la première section de manipulation de bobine lorsque la première station est dans la position d'enroulement dans la section d'enroulement et qui, en combinaison avec le premier diviseur, sont agencés pour former une protection autour de la section d'enroulement et la seconde section de manipulation de bobine lorsque la seconde station est dans la position d'enroulement dans la section d'enroulement, de préférence lorsque le deuxième et/ou d'autres diviseurs sont mobiles de manière alternée entre une première position dans laquelle ils protègent la première section de manipulation de bobine et une seconde position dans laquelle ils protègent la seconde section de manipulation de bobine.

7. Système selon l'une quelconque des revendications 4 à 6, dans lequel les un ou plusieurs diviseurs sont chacun définis par une limite du groupe comprenant une barrière, une paroi, un champ de détection optique ou un réseau de faisceaux lumineux.

8. Système selon l'une quelconque des revendications précédentes, dans lequel chaque station comprend un chariot qui permet de déplacer la station entre sa section d'enroulement de bobine respective et la section d'enroulement, dans lequel le premier ensemble d'éléments de support et le second ensemble d'éléments de support s'étendent sur les côtés opposés du chariot, de préférence dans lequel le système comprend un guide qui s'étend à travers chacune des sections dans la direction dans laquelle les sections sont positionnées de manière adjacente entre elles, dans lequel les chariots des stations sont placés sur le guide.

9. Système selon l'une quelconque des revendications précédentes, dans lequel le premier ensemble d'éléments de support et le second ensemble d'éléments de support sont mobiles l'un par rapport à l'autre dans la direction axiale des bobines.

10. Système selon l'une quelconque des revendications précédentes, dans lequel chaque ensemble d'éléments de support comprend deux bras qui sont agencés pour mettre en prise un axe d'une bobine à partir des deux côtés de la bobine, dans lequel, pour chaque ensemble d'éléments de support, les bras sont mobiles l'un par rapport à l'autre dans la direction axiale de la bobine, de préférence dans lequel les bras sont mobiles l'un par rapport à l'autre selon une translation dans la direction axiale de la bobine.

11. Système selon l'une quelconque des revendications précédentes, comprenant en outre un premier mécanisme de levage au niveau de la première section de manipulation de bobine et un second mécanisme de levage au niveau de la seconde section de manipulation de bobine, dans lequel les mécanismes de levage sont agencés pour lever ou abaisser les bobines de stockage et les bobines de revêtement vers et depuis leurs stations respectives.

12. Procédé pour enrouler et/ou dérouler un matériau en feuille de caoutchouc pour pneus et un revêtement intermédiaire sur ou depuis des bobines de stockage, en utilisant un système comprenant une première section de manipulation de bobine, une seconde section de manipulation de bobine et une section d'enroulement positionnée entre la première section de manipulation de bobine et la seconde section de manipulation de bobine, dans lequel le système est prévu avec une première station et une seconde station, dans lequel chaque station comprend un premier ensemble d'éléments de support pour maintenir une bobine de stockage et un second ensemble d'éléments de support pour maintenir une bobine de revêtement sensiblement en tandem avec la bobine de stockage, dans lequel le procédé comprend les étapes consistant à stationner la première station et la seconde station dans une position de manipulation dans le première section de manipulation de bobine et la seconde section de manipulation de bobine respectivement, charger et/ou décharger les bobines de stockage et les bobines de revêtement sur ou depuis les stations, et déplacer de manière alternée la première station et la seconde station à partir de leurs positions de manipulation respectives dans les sections de manipulation de bobine dans une position d'enroulement dans la section d'enroulement et vice versa.

13. Procédé selon la revendication 12, dans lequel la première station et la seconde station sont déplacées en fonction l'une de l'autre, et dans lequel le procédé comprend l'étape consistant à déplacer la seconde station dans la position de manipulation dans sa section de manipulation de bobine respective lorsque la première station est dans la position d'enroulement dans la section d'enroulement, et vice versa, de préférence dans lequel la première station et la seconde station sont conjointement déplacées.

14. Procédé selon la revendication 12 ou 13, dans lequel le système comprend un premier diviseur qui est placé entre la première station et la seconde station, dans lequel le procédé comprend les étapes consistant à déplacer le premier diviseur en fonction des stations, protégeant ainsi la première station au niveau du côté de la première station orienté vers la seconde section de manipulation de bobine lorsque la première station est dans la position d'enroulement dans la section d'enroulement, et protéger la seconde station au niveau du côté de la seconde station orienté vers la première section de manipulation de bobine lorsque la seconde station est dans la position d'enroulement, de préférence dans lequel le premier diviseur et les stations sont déplacés conjointement.

15. Procédé selon l'une quelconque des revendications 12 à 14, dans lequel le système comprend un capteur, dans lequel le procédé comprend les étapes consistant à détecter l'extrémité du revêtement avec le capteur lorsque le revêtement est enroulé sur l'une des bobines, contrôler la rotation de la bobine sur laquelle le revêtement est enroulé en fonction de l'extrémité détectée du revêtement de sorte que, après la rotation contrôlée, l'extrémité détectée du revêtement est positionnée dans une position prédéterminée sur la bobine.
